# EUROPÄISCHE PATENTANMELDUNG

(11) **EP 1 215 478 A2**
(43) Veröffentlichungstag der Anmeldung: **19.06.2002**
(21) Anmeldenummer: 01125942.1
(22) Anmeldetag: 31.10.2001
(51) Int. Cl.: G01L 19/10

(54) **Druckanzeigeeinrichtung**

(30) Priorität: 13.12.2000 DE 20021111 U
(71) Anmelder: FESTO AG & Co, 73734 Esslingen (DE)
(72) Erfinder: Gebauer, Günter, 73728 Esslingen (DE); Schüfer, Wolfgang, 70597 Stuttgart (DE)
(74) Vertreter: Abel, Martin, Dipl.-Ing.

(57) **Zusammenfassung**

Die Erfindung betrifft eine Druckanzeigeeinrichtung mit einem hinter einer Sichtscheibe angeordneten Zifferblatt (3), dem eine einem bogenförmigen Verlauf folgende und einen Anzeigebereich definierende Skala zugeordnet ist. Es sind zwei in der Skalenverlaufsrichtung unabhängig voneinander relativ zur Skala (4) verstellbaren Markierungselemente (15, 16) vorgesehen, die zur Markierung der unteren und oberen Bereichsgrenze eines Anzeigeteilbereiches (19) dienen. An den Markierungselementen (15, 16) sind sich in der Skalenverlaufsrichtung erstreckende Kennzeichnungsflächen (32a, 32b) vorgesehen, die sich ausgehend von der jeweils markierten Bereichsgrenze entlang den sich an den markierten Anzeigeteilbereich (19) anschließenden unteren und oberen Skalenendabschnitten erstrecken.

## Beschreibung

Die Erfindung betrifft eine Druckanzeigeeinrichtung, insbesondere Manometer, mit einem hinter einer Sichtscheibe angeordneten Zifferblatt, dem eine einem bogenförmigen Verlauf folgende und einen Anzeigebereich definierende Skala zugeordnet ist, mit einem einen entlang der Skala beweglichen Anzeigeabschnitt aufweisenden Zeiger, und mit zwei in der Skalenverlaufsrichtung unabhängig voneinander relativ zur Skala verstellbaren Markierungselementen zur Markierung der unteren und oberen Bereichsgrenze eines Anzeigeteilbereiches.

Bei einer aus der DE 195 30 001 A1 bekannten Druckanzeigeeinrichtung sind neben der Skala zwei verstellbare Markierungselemente vorgesehen, die reiterartig auf einem Lagerungsvorsprung des Gehäuses der Druckanzeigeeinrichtung sitzen und bei abgenommener Sichtscheibe verstellt und positioniert werden können. Die Skala der Druckanzeigeeinrichtung gibt einen möglichen Anzeigebereich vor, wobei anhand der Zeigerstellung der aktuell in einer angeschlossenen Einrichtung herrschende Druck abgelesen werden kann. Durch entsprechende Positionierung der Markierungselemente lässt sich ein Anzeigeteilbereich markieren, der einen optimalen Druck-Arbeitsbereich wiedergibt, mit dem die angeschlossene Einrichtung betrieben werden sollte. Die den Betrieb der angeschlossenen Einrichtung überwachende Person kann sich somit darauf konzentrieren, ob die Zeigerstellung innerhalb oder außerhalb des markieren Anzeigeteilbereiches liegt.

Da bei der bekannten Druckanzeigeeinrichtung die Markierungselemente relativ klein sind, fällt die zuverlässige Überwachung des Einhaltens eines gewünschten Druck-Arbeitsbereiches relativ schwer und ist nicht selten mit Ablesefehlern verbunden. Es ist daher die Aufgabe der vorliegenden Erfindung, eine Druckanzeigeeinrichtung zu schaffen, mit der sich das Einhalten eines bestimmten Druck-Arbeitsbereiches zuverlässiger überwachen lässt.

Zur Lösung dieser Aufgabe sind an den Markierungselementen sich in der Skalenverlaufsrichtung erstreckende Kennzeichnungsflächen vorgesehen, die sich ausgehend von der jeweils markierten Bereichsgrenze entlang den sich an den markierten Anzeigeteilbereich anschließenden unteren und oberen Skalenendabschnitten erstrecken.

Zur Überwachung der Einhaltung eines bestimmten Druck-Arbeitsbereiches kann somit weiterhin eine dahingehende Positionierung der Markierungselemente stattfinden, dass diese die untere und obere Bereichsgrenze eines Anzeigeteilbereiches der Skala markieren, der dem zu überwachenden und einzuhaltenden Druck-Arbeitsbereich entspricht. Im Vergleich zum Stand der Technik ist diese Markierung eindeutig, weil durch die an den Markierungselementen vorgesehenen Kennzeichnungsflächen die unterhalb und oberhalb des Anzeigeteilbereiches liegenden Skalenendabschnitte eindeutig gekennzeichnet werden. Die kontrollierende Person kann daher mit einem Blick zweifelsfrei erkennen, ob der angezeigte Druck innerhalb oder außerhalb des gewünschten Druck-Arbeitsbereiches liegt.

Vorteilhafte Weiterbildungen der Erfindung gehen aus den Unteransprüchen hervor.

Besonders vorteilhaft ist eine dahingehend Dimensionierung der Kennzeichnungsflächen, dass diese sich unabhängig vom markierten Anzeigeteilbereich über zumindest die gesamte Länge des sich anschließenden unteren und oberen Skalenendabschnittes erstrecken.

Eine noch komfortablere Ablesemöglichkeit mit hohem Sicherheitsstandard ergibt sich in Verbindung mit einer Ausführungsform der Druckanzeigeeinrichtung, bei der eine relativ zur Skala feststehende, sich in der Skalenverlaufsrichtung erstreckende und einen bestimmten möglichen Arbeitsbereich markierende Arbeitsbereichsmarkierung vorhanden ist, wobei die Kennzeichnungsflächen der Markierungselemente der Arbeitsbereichsmarkierung zur Sichtseite der Druckanzeigeeinrichtung hin vorgelagert sind und sich unter fensterartiger Begrenzung eines dem Anzeigeteilbereich entsprechenden Markierungsausschnittes der Arbeitsbereichsmarkierung in der Skalenverlaufsrichtung über die unterhalb und oberhalb der Bereichsgrenzen liegenden Endabschnitte der Arbeitsbereichsmarkierung hinweg erstrecken.

Auf diese Weise besteht die Möglichkeit, allein durch das Zusammenwirken der Kennzeichnungsflächen und der Arbeitsbereichsmarkierung eine von der Skala unabhängige zuverlässige Drucküberwachung vorzunehmen. Die den möglichen Arbeitsbereich definierende Arbeitsbereichsmarkierung liegt hinter den Kennzeichnungsflächen der Markierungselemente, die somit als Abdeckelemente fungieren, indem sie die oberhalb und unterhalb der Bereichsgrenzen liegenden Abschnitte der Arbeitsbereichsmarkierung ganz oder teilweise einer Einsichtnahme entziehen und eine ungehinderte Sicht lediglich auf den dem Anzeigeteilbereich entsprechenden Markierungsausschnitt zulassen. Dabei ist es zweckmäßig, die Kennzeichnungsflächen so auszubilden, dass die momentan unterhalb und oberhalb der Bereichsgrenzen liegenden Endabschnitte der Arbeitsbereichsmarkierung über zumindest den größten Teil ihrer Breite und insbesondere vollständig abgedeckt werden. In Verbindung mit einer sinnvoll abgestuften Farbgebung, beispielsweise mit grüner Arbeitsbereichsmarkierung und mit roten Kennzeichnungsflächen, lässt sich eine hohe Ablesegenauigkeit realisieren. Befindet sich der Anzeigeabschnitt des Zeigers im grünen Bereich, entspricht dies einer Einhaltung des gewünschten Druck-Arbeitsbereiches. Ein Zeigerstand im roten Bereich hingegen vermittelt unzweideutig einen unerwünschten Druckwert.

Die Arbeitsbereichsmarkierung ist zweckmäßigerweise unmittelbar am Zifferblatt ausgebildet und hebt sich vorzugsweise sehr kontrastreich von den sie umgebenden Zifferblattabschnitten ab.

Es besteht auch die Möglichkeit, die Arbeitsbereichsmarkierung so vorzusehen, dass sie sich lediglich entlang einer Teillänge der Skala erstreckt, und zwar insbesondere derart, dass der Anzeigebereich der Skala sowohl über das untere als auch über das obere Ende der Anzeigebereichsmarkierung hinaustritt. Damit kann der Tatsache Rechnung getragen werden, dass bei unteren und oberen Skalenendwerten regelmäßig eine relativ hohe Meßungenauigkeit vorliegt und man mit der entsprechend ausgebildeten und angeordneten Arbeitsbereichsmarkierung den optimalen Arbeitsbereich signalisieren kann.

Zweckmäßigerweise sind die Markierungselemente ferner derart ausgebildet, dass die Zeigerstellung auch dann noch erkennbar ist, wenn diese außerhalb des Anzeigeteilbereiches liegt. In Verbindung mit abdeckend wirkenden Kennzeichnungsflächen kann dies dadurch realisiert werden, dass man die Dimensionierung der Kennzeichnungsflächen und des Zeigers so wählt, dass der Anzeigeabschnitt des Zeigers nur teilweise von den Kennzeichnungsflächen überdeckt wird.

Um die Verstellbarkeit der mit Kennzeichnungsflächen versehenen Markierungselemente relativ zueinander und relativ zum Zifferblatt zu gewährleisten, wäre beispielsweise eine Lösung denkbar, bei der das Zifferblatt selbst eines der Markierungselemente bildet und bezüglich dem Zifferblatt verstellbar bzw. verdrehbar ist. Als zweckmäßiger wird jedoch eine Ausführungsform angesehen, bei der die Sichtscheibe drehfest mit der Skala bzw. dem Zifferblatt verbunden ist, wobei die beiden Markierungselemente an der Sichtscheibe relativ zueinander und relativ zur Sichtscheibe verstellbar gelagert sind. Dabei wird insbesondere eine zur Drehachse des Zeigers koaxiale Drehlagerung vorgesehen.

Man könnte die Anordnung so treffen, dass die Markierungselemente ohne Abnehmen der Sichtscheibe direkt von außen her einstellbar sind. Aus Sicherheitsgründen, um ein unbeabsichtigtes Verstellen zu verhindern, ist es jedoch empfehlenswert, die Markierungselemente derart an der Innenseite der Sichtscheibe anzuordnen, dass sie von außen her unzugänglich sind und die Sichtscheibe zum Ändern der Einstellung abgenommen werden muss. Um die Einstellung hier zu erleichtern, kann eine Einstellschablone dem Lieferumfang der Druckanzeigeeinrichtung beigefügt werden.

Nachfolgend wird die Erfindung anhand der beiliegenden Zeichnung näher erläutert. In dieser zeigen:
- Figur 1: eine erste Ausführungsform der erfindungsgemäßen Druckanzeigeeinrichtung in Explosionsdarstellung,
- Figur 2: eine Vorderansicht der Druckanzeigeeinrichtung aus Figur 1 mit Blick von der Sichtseite her, wobei die Blickrichtung durch Pfeil II verdeutlicht ist,
- Figur 3: eine weitere Bauform der erfindungsgemäßen Druckanzeigeeinrichtung in einer der Figur 1 entsprechenden perspektivischen Explosionsdarstellung, und
- Figur 4: eine Vorderansicht der Druckanzeigeeinrichtung aus Figur 3 von der Sichtseite her mit Blickrichtung gemäß Pfeil IV.

Bei den in der Zeichnung abgebildeten Druckanzeigeeinrichtungen handelt es sich um Manometer, die insbesondere mit einem sogenannten Bourdon-Rohr ausgestattet sind, dessen Krümmung sich in Abhängigkeit von einem anstehenden, zu messenden Druck ändert, wobei die Gestaltänderung des Bourdon-Rohres in die Drehbewegung eines Zeigers 1 umgesetzt wird.

Die Druckmeßeinrichtung verfügt über ein die nicht näher dargestellte Betätigungsmechanik enthaltendes Gehäuse 2 mit insbesondere zylindrischer Gestalt. An der zur Sichtseite hin orientierten Vorderseite des Gehäuses 2 ist ein Zifferblatt 3 vorgesehen, das eine einem bogenförmigen Verlauf folgende Skala 4 trägt.

Dem Zifferblatt zur Sichtseite hin vorgelagert ist der schon erwähnte Zeiger 1, der um eine Zeiger-Drehachse 5 verdrehbar ist. Er besitzt einen ausgehend von der Drehachse 5 radial abstehenden Anzeigeabschnitt 6, der zur Skala 4 hin ragt, welche sich bogenförmig konzentrisch ein Stück weit um die Drehachse 5 herum erstreckt. Bei beiden Ausführungsbeispielen ist die Skala 4 so angeordnet, dass der Anzeigeabschnitt 6 radial über die Skala 4 hinausragt.

Das Zifferblatt 3 liegt hinter einer aus Glas oder aus transparentem Kunststoffmaterial bestehenden Sichtscheibe 7, die lösbar an die Vorderseite des Gehäuses 2 angesetzt ist. Der Zeiger 1 befindet sich dabei in dem zwischen dem Zifferblatt 3 und der diesem zur Sichtseite hin vorgelagerten Sichtscheibe 7 befindlichen Zwischenraum.

Die Sichtscheibe 7 kann beispielsweise durch Verrastung am Gehäuse 2 fixiert sein. Beim Ausführungsbeispiel besitzt das Gehäuse 2 einen über das Zifferblatt 3 vorstehenden umlaufenden Halterand 8 und die Sichtscheibe 7 verfügt über einen zum Gehäuse 2 hin wegragenden Befestigungskragen 11, der konzentrisch in den Halterand 8 eingreift. Nicht näher dargestellte Rastmittel oder sonstige Befestigungsmittel sorgen für eine lösbare Befestigung, die ein bedarfsgemäßes Entfernen der Sichtscheibe 7 vom Gehäuse 2 ermöglicht.

Am Gehäuse 2 und an der Sichtscheibe 7 vorgesehene Positionssicherungsmittel 12, 13 greifen bei am Gehäuse 2 fixierter Sichtscheibe 7 derart formschlüssig ineinander, dass die Sichtscheibe 7 bezüglich dem Gehäuse 2 und somit auch bezüglich dem Zifferblatt 3 und der Skala 4 unverdrehbar gesichert ist.

Das Gehäuse 2 verfügt an geeigneter Stelle, beispielsweise an der Rückseite, über einen nicht näher dargestellten Druckanschluß, an dem der zu messende Druck eingespeist wird. Die Druckanzeigeeinrichtung kann beispielsweise Bestandteil eines Druckreglers sein, wobei über den Druckanschluß der einzustellende Sekundärdruck zugeführt wird. Der Druckregler wiederum kann zum Beispiel zu einem Druckluft-Wartungsgerät gehören.

Entsprechend der Höhe des eingespeisten Druckes ergibt sich eine bestimmte Drehposition des Zeigers 1 bezüglich der Skala 4. Bei sich änderndem Druck verlagert sich der Anzeigeabschnitt 6 entlang der Skala 4. Der mögliche Anzeigebereich wird von der Skalenlänge definiert und ist in der Zeichnung durch einen Doppelpfeil bei 14 gekennzeichnet.

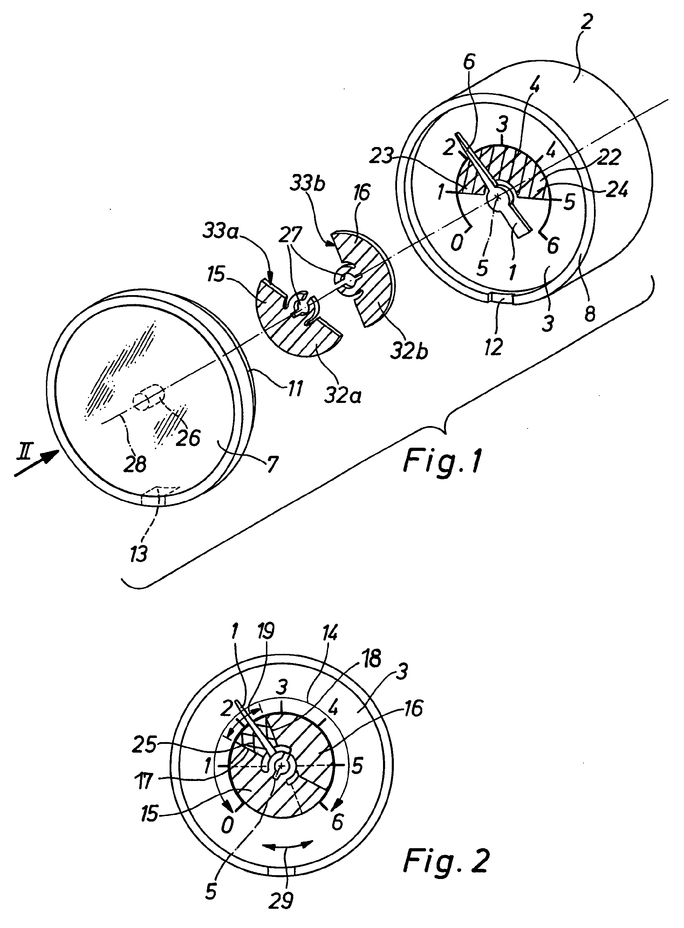

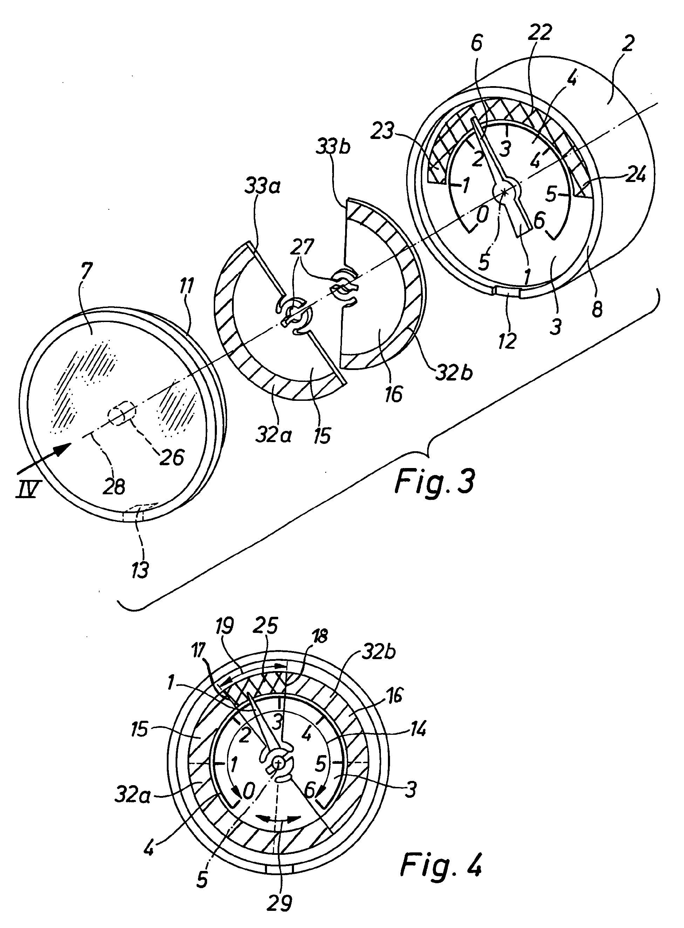

Die Druckanzeigeeinrichtungen enthalten des Weiteren jeweils zwei in der Skalenverlaufsrichtung unabhängig voneinander relativ zur Skala 4 und somit auch relativ zum Zifferblatt 3 bzw. zum Gehäuse 2 verstellbare Markierungselemente 15, 16, die eine variable Markierung der unteren und oberen Bereichsgrenze eines in Figuren 2 und 4 durch einen Doppelpfeil gekennzeichneten Anzeigeteilbereiches 19 ermöglichen. Der Anzeigeteilbereich 19 entspricht einem Längenabschnitt des Anzeigebereiches 14, wobei durch die variable Verstellmöglichkeit sowohl die Lage der Bereichsgrenzen 17, 18 als auch die Länge des zwischen den Bereichsgrenzen 17, 18 liegenden Anzeigeteilbereiches 19 nach Bedarf vorgegeben werden kann.

Üblicherweise wird die Druckanzeigeeinrichtung zur Einstellung und Überwachung des über den Druckanschluß eingespeisten Druckes eingesetzt, wobei die meisten Anwendungen eine gewisse Bandbreite des Druckes zulassen, die man als Druck-Arbeitsbereich bezeichnen kann. Solange sich der angezeigte Druck in dem Druck-Arbeitsbereich befindet, liegt ein ordnungsgemäßer Betrieb der angeschlossenen Einrichtung vor. Der individuell einstellbare Anzeigeteilbereich 19 entspricht dem zu überwachenden Druck-Arbeitsbereich, so dass ein Beobachter sehr rasch mit einem Blick feststellen kann, ob sich der zu überwachende Druck im zulässigen Bereich befindet oder nicht.

Bei dem Ausführungsbeispiel der Figuren 1 und 2 ist ein Anzeigeteilbereich 19 eingestellt, der einem Druck-Arbeitsbereich zwischen 1,5 bar und 2,5 bar entspricht. Im Falle der Ausführungsform gemäß Figuren 3 und 4 entspricht der eingestellte Anzeigeteilbereich einem Druck-Arbeitsbereich zwischen etwa 2,2 bar und 3,1 bar.

Die Druckanzeigeeinrichtungen gemäß Ausführungsbeispiel sind zusätzlich zur Skala 4 mit einer relativ zur Skala 4 feststehenden, sich in der Skalenverlaufsrichtung erstreckenden Arbeitsbereichsmarkierung 22 versehen. Diese Arbeitsbereichsmarkierung 22 markiert einen bestimmten möglichen Arbeitsbereich entlang der Skala 4, wobei es sich in der Regel um denjenigen Arbeitsbereich handelt, in dem die Druckanzeigeeinrichtung eine exakte Druckerfassung- und Anzeige gewährleistet. Da die Anzeigetoleranzen in aller Regel am Skalenanfang und am Skalenende besonders ausgeprägt sind, erstreckt sich die Arbeitsbereichsmarkierung 22 lediglich entlang einer Teillänge der Skala 4, wobei der Anzeigebereich 14 der Skala 4 sowohl über das untere als auch über das obere Ende 23, 24 der Arbeitsbereichsmarkierung 22 hinausgeht. Diese Gegebenheiten sind in Figuren 1 und 3 gut ersichtlich.

Die Arbeitsbereichsmarkierung 22 ist zweckmäßigerweise unmittelbar am Zifferblatt 3 vorgesehen und beispielsweise auf das Zifferblatt 3 aufgedruckt. Zur guten Erkennbarkeit weicht die Farbe der Arbeitsbereichsmarkierung 22 von der restlichen Farbgebung des Zifferblattes 3 ab. Zweckmäßigerweise ist sie in grüner Farbe ausgeführt.

Beim Ausführungsbeispiel der Figuren 3 und 4 ist die Arbeitsbereichsmarkierung 22 kreisbogenartig ausgebildet, wobei das Bogenzentrum mit der Drehachse 5 zusammenfällt. In radialer Richtung gesehen liegt die Arbeitsbereichsmarkierung 22 außerhalb der Skala 4.

Im Gegensatz dazu befindet sich die Arbeitsbereichsmarkierung 22 beim Ausführungsbeispiel der Figuren 1 und 2 radial innerhalb der Skala 4, wobei wiederum eine kreisbogenartige Formgebung gewählt ist, die annähernd einem Kreissegment entspricht, weil die Breitenabmessungen so gewählt sind, dass der innere Rand in unmittelbarer Nähe der Drehachse 5 liegt.

Ist durch entsprechende Positionierung der Markierungselemente 15, 16 ein gewünschter Anzeigeteilbereich 19 der Skala 4 markiert, hat dies gleichzeitig die Markierung eines zugeordneten Markierungsausschnittes 25 der Arbeitsbereichsmarkierung 22 zur Folge. Die winkelmäßige Erstreckung des Markierungsausschnittes 25 bezüglich der Drehachse 5 entspricht derjenigen des zugeordneten Anzeigeteilbereiches 19.

Die Markierungselemente 15, 16 befinden sich in dem Zwischenraum zwischen der Skala 4 und der Sichtscheibe 7 und dort zwischen letzterer und dem Zeiger 1. Sie sind also dem Zeiger 1 zur Sichtseite der Druckanzeigeeinrichtung hin vorgelagert.

Obgleich prinzipiell eine gehäuseseitige Lagerung möglich wäre, sind die Markierungselemente 15, 16 beim Ausführungsbeispiel in vorteilhafter Weise an der Sichtscheibe 7 gelagert. Es handelt sich vorliegend um eine Drehlagerung, die mit der Möglichkeit zur voneinander unabhängigen drehwinkelmäßigen Justierung der Markierungselemente 15, 16 relativ zueinander und relativ zur Sichtscheibe 7 einhergeht. Die Markierungselemente 15, 16 können also individuell und unabhängig voneinander relativ zur Sichtscheibe 7 und, da letztere drehfest am Gehäuse 2 fixiert ist, relativ zur Skala 4 und zur Arbeitsbereichsmarkierung 22 positioniert werden.

Die Markierungselemente 15, 16 sind von außen her unzugänglich an der Innenseite der Sichtscheibe angeordnet, so dass sie vor einem versehentlichen Verstellen gesichert sind. Abweichend von einer prinzipiell ebenfalls möglichen Bauweise, bei der die Markierungselemente 15, 16 ohne Demontage der Sichtscheibe 7 von außen her justiert werden können, ist es somit beim Ausführungsbeispiel zum Ändern der Einstellung des Anzeigeteilbereiches notwendig, die Sichtscheibe 7 vorübergehend vom Gehäuse 2 abzunehmen.

Die verstellbare Lagerung der Markierungselemente 15, 16 ist beim Ausführungsbeispiel dadurch bewirkt, dass an der Innenseite der Sichtscheibe 7 ein koaxial zur Zeiger-Drehachse 5 angeordneter Drehlagerzapfen 26 nach innen vorsteht, auf den die beiden Markierungselemente 15, 16 aufeinanderfolgend mit geeigneten Aufnahmen 27 verdrehbar aufgesteckt sind. Die Aufnahmen 27 sind federelastisch, so dass zum einen ein sicherer Halt gewährleistet wird, zum andern aber die Möglichkeit zu einer Drehpositionierung bezüglich der vom Drehlagerzapfen 26 definierten Drehachse 28 verbleibt.

Durch in Achsrichtung hintereinanderliegende Anordnung der Markierungselemente 15, 16 ist eine relative Verstellmöglichkeit gegeben, bei der sich die Markierungselemente 15, 16 ohne gegenseitige Behinderung hintergreifen können. Es ist also in der durch Doppelpfeil 29 angedeuteten Verstellrichtung ein gegenseitiges Überlappen möglich.

Zur Definition der bezüglich der Zeiger-Drehachse 5 koaxialen Dreh- bzw. Lagerachse 28 der Markierungselemente 15, 16 wäre es beispielsweise auch möglich, die Sichtscheibe 17 mit einer zentralen Durchbrechung zu versehen und an den Markierungselementen 15, 16 Lagerzapfen auszubilden, die in die Durchbrechung drehbeweglich eingreifen können.

Gemäß der Zeichnung können die Markierungselemente 15, 16 kreissegmentartig ausgebildet sein, wobei es sich im Hinblick auf Materialbedarf und Einstellflexibilität als optimal erwiesen hat, eine einem Zentriwinkel von 180° entsprechende Bogenlänge zu wählen. Allerdings sind auch andere Bogenlängen möglich, was insbesondere von der Skalenlänge und der Länge der Arbeitsbereichsmarkierung 22 abhängt.

Jedes Markierungselement 15 ist mit einer sich in der Skalenverlaufsrichtung erstreckenden Kennzeichnungsfläche 32a, 32b versehen. Diese Kennzeichnungsflächen 32a, 32b sind so plaziert, dass sie vor der Arbeitsbereichsmarkierung 22 liegen. Die Erstreckungslänge um die Drehachse 28 ist jeweils geringer als 360° und beläuft sich beim Ausführungsbeispiel auf jeweils 180°.

Jedes Markierungselement 15, 16 hat eine in Verstellrichtung weisende Abschlußkante 33a, 33b, die bei der getroffenen Einstellung die untere und obere Bereichsgrenze 17, 18 definieren. Die Kennzeichnungsflächen 32a, 32b beginnen an der jeweiligen Abschlußkante 33a, 33b und somit bei der jeweils markierten Bereichsgrenze 17, 18, ausgehend von der sie sich entlang den sich an den markierten Anzeigeteilbereich 19 anschließenden unteren und oberen Skalenendabschnitten erstrecken.

Da die Kennzeichnungsflächen 32a, 32b der Arbeitsbereichsmarkierung 22 vorgelagert sind, führt die Einstellung eines Anzeigeteilbereiches 19 gleichzeitig zu einer fensterartigen beidseitigen Begrenzung des dem Anzeigeteilbereich 19 entsprechenden, oben bereits erläuterten Markierungsausschnittes 25.
Gleichzeitig werden die sich unterhalb und oberhalb der Bereichsgrenzen 17, 18 an den Markierungsausschnitt 25 anschließenden Endabschnitte der Arbeitsbereichsmarkierung 22 von den Kennzeichnungsflächen 32a, 32b abgedeckt, so dass sie für einen Betrachter nicht mehr sichtbar sind. Sie werden praktisch ausgeblendet.

Die in der Skalenverlaufsrichtung gemessene Länge der Kennzeichnungsflächen 32a, 32b ist dabei zweckmäßigerweise so gewählt, dass sie sich unabhängig von der getroffenen Einstellung über die gesamte Länge des sich an den Anzeigeteilbereich unten und oben anschließenden Skalenendabschnittes erstrecken und insbesondere auch die erwähnten unteren und oberen Endabschnitte der Arbeitsbereichsmarkierung 22 über ihre gesamte Länge hinweg abdecken.

Vor allem in Verbindung mit einer von der Arbeitsbereichsmarkierung 22 farblich abweichenden Gestaltung der Kennzeichnungsflächen 32a, 32b kann das Einhalten eines gewünschten Druck-Arbeitsbereiches sehr gut überwacht werden. Als optimal hat sich dabei eine rote Farbgebung der Kennzeichnungsflächen erwiesen. Befindet sich der Anzeigeabschnitt 6 des Zeigers 1 in dem von den Kennzeichnungsflächen 32a, 32b begrenzten grünen Markierungsausschnitt, liegt ein mit den Sollwerten übereinstimmender Istwert des eingestellten Druckes vor. Befindet sich der Anzeigeabschnitt 6 hingegen nicht mehr im grünen Markierungsausschnitt 25, sondern unterhalb oder oberhalb dessen im Bereich einer roten Kennzeichnungsfläche 32a, 32b, läßt sich sofort das Nichteinhalten der Sollwerte visuell erfassen.

Dabei ist es zweckmäßig, wenn die Markierungselemente 15, 16 so ausgebildet sind, dass ein Teil des Anzeigeabschnittes 6 des Zeigers 1 auch dann noch von der Sichtseite der Druckanzeigeeinrichtung her erkennbar ist, wenn die Zeigerstellung mit einer der Kennzeichnungsflächen 32a, 32b zusammenfällt. Der Beobachter weis dann sofort, ob er zur Nachjustierung des gewünschten Druckes eine Druckerhöhung oder Druckerniedrigung vorzunehmen hat.

In diesem Zusammenhang ist beim Ausführungsbeispiel der Figuren 1 und 2 die Länge des Anzeigeabschnittes 6 des Zeigers 1 so gewählt, dass der Zeiger radial über die Kennzeichnungsflächen 32a, 32b der Markierungselemente 15, 16 hinausragt. Die Markierungselemente 15, 16 sind dabei insgesamt halbkreisähnlich geformt, wobei sich die zweckmäßigerweise undurchsichtige Kennzeichnungsfläche 32a, 32b über die gesamte Fläche der Markierungselemente 15, 16 hinweg erstreckt. Befindet sich der Zeiger 1 hinter einem Markierungselement 15, 16, ist somit nur die radial darüber hinausragende Zeigerspitze zu sehen.

Anders im Falle des Ausführungsbeispiels gemäß Figuren 3 und 4. Auch hier haben die Kennzeichnungsflächen 32a, 32b eine der Formgebung der Arbeitsbereichsmarkierung 22 entsprechende Gestalt und sind somit kreisbogenförmig ausgebildet mit der Drehachse 28 als Zentrum und mit radial Abstand zu diesem. Die Zeigerlänge ist so gewählt, das die Zeigerspitze auf radialer Höhe der Arbeitsbereichsmarkierung 22 liegt, so dass bei einer außerhalb des Anzeigeteilbereichs 19 liegenden Zeigerstellung die Zeigerspitze von der zugeordneten Kennzeichnungsfläche 32a, 32b verdeckt wird. Eine Erkennung der Zeigerstellung ist hier dadurch gewährleistet, dass die Markierungselemente 15, 16 außerhalb der Kennzeichnungsfläche 32a, 32b und somit radial innerhalb dieser durchsichtig ausgebildet sind und der darunter liegende Zeiger somit erkennbar bleibt.

Es wäre auch möglich, die Markierungselemente als kreisförmig konturierte Scheibenelemente auszuführen, die an den gewünschten Stellen mit den Kennzeichnungsflächen 32a, 32b versehen und im übrigen durchsichtig ausgebildet sind. Bei an der Innenseite der Sichtscheibe drehgelagerter Ausführungsform ist es dabei aber empfehlenswert, den Durchmesser des unmittelbar auf die Sichtscheibe folgenden Markierungselementes 32a größer zu wählen als denjenigen des dem Zeiger 1 benachbarten Markierungselementes 32b, um die Zugänglichkeit zur manuellen Justierung zu gewährleisten.

Der mit der Erfindung erzielbare Ablesekomfort bleibt im wesentlichen auch dann noch erhalten, wenn die radial gemessene Breite der Kennzeichnungsflächen 32a, 32b etwas geringer ist als diejenige der zugeordneten Arbeitsbereichsmarkierung 22, so dass beispielsweise ein Randbereich des abgedeckten Längenabschnittes der Arbeitsbereichsmarkierung 22 weiterhin sichtbar bleibt. Um eine optimale Ablesesicherheit zu gewährleisten, sollte jedoch eine komplette Abdeckung verwirklicht werden.

Bei einer nicht näher dargestellten Ausführungsform sind die Kennzeichnungsflächen 32a, 32b nicht als Abdeckflächen konzipiert, sondern dienen tatsächlich nur zur reinen Kennzeichnung der sich an die Bereichsgrenzen 17, 18 beidseits des ausgewählten Anzeigeteilbereiches anschließenden Skalenabschnitte. Auch dadurch lässt sich bereits eine unzweideutige Markierung und Ablesemöglichkeit gewährleisten. Es ist dabei auch nicht notwendigerweise erforderlich, eine gesonderte Arbeitsbereichsmarkierung 22 vorzusehen.

Bei den Ausführungsbeispielen ist eine numerische Skala 4 vorhanden, wobei aber auch eine andersartige aufgebaute Skala verwendbar wäre, beispielsweise auch eine Farbskala. Die Arbeitsbereichsmarkierung 22 und die Skala 4 könnten auch in Baueinheit ausgeführt sein.

## Patentansprüche

1. Druckanzeigeeinrichtung, insbesondere Manometer, mit einem hinter einer Sichtscheibe (7) angeordneten Zifferblatt (3), dem eine einem bogenförmigen Verlauf folgende und einen Anzeigebereich (14) definierende Skala (4) zugeordnet ist, mit einem einen entlang der Skala (4) beweglichen Anzeigeabschnitt (6) aufweisenden Zeiger (1), und mit zwei in der Skalenverlaufsrichtung unabhängig voneinander relativ zur Skala (4) verstellbaren Markierungselementen (15, 16) zur Markierung der unteren und oberen Bereichsgrenze (17, 18) eines Anzeigeteilbereiches (19), **dadurch gekennzeichnet, dass** an den Markierungselementen (15, 16) sich in der Skalenverlaufsrichtung erstreckende Kennzeichnungsflächen (32a, 32b) vorgesehen sind, die sich ausgehend von der jeweils markierten Bereichsgrenze (17, 18) entlang den sich an den markierten Anzeigeteilbereich (19) anschließenden unteren und oberen Skalenendabschnitten erstrecken.

2. Druckanzeigeeinrichtung nach Anspruch 1, **dadurch gekennzeichnet, dass** die Kennzeichnungsflächen (32a, 32b) derart dimensioniert sind, dass sie sich unabhängig vom markierten Anzeigeteilbereich (19) zumindest über die gesamte Länge des sich anschließenden unteren und oberen Skalenendabschnittes erstrecken.

3. Druckanzeigeeinrichtung nach Anspruch 1 oder 2, **dadurch gekennzeichnet, dass** eine relativ zur Skala (4) feststehende, sich in der Skalenverlaufsrichtung erstreckende und einen bestimmten möglichen Arbeitsbereich markierende Arbeitsbereichsmarkierung (22) vorhanden ist, wobei die Kennzeichnungsflächen (32a, 32b) der Markierungselemente (15, 16) der Arbeitsbereichsmarkierung (22) zur Sichtseite der Druckeinzeigeeinrichtung hin vorgelagert sind und sich unter fensterartiger Begrenzung eines dem Anzeigeteilbereich (19) entsprechenden Markierungsausschnittes (25) in der Skalenverlaufsrichtung über die unterhalb und oberhalb der Bereichsgrenzen (17, 18) liegenden Endabschnitte der Arbeitsbereichsmarkierung (22) hinweg erstrecken.

4. Druckanzeigeeinrichtung nach Anspruch 3, **dadurch gekennzeichnet, daß** die Kennzeichnungsflächen (32a, 32b) so ausgebildet sind, dass sie die unterhalb und oberhalb der Bereichsgrenzen (17, 18) liegenden Endabschnitte der Arbeitsbereichsmarkierung (22) über zumindest den größten Teil ihrer Breite und insbesondere über ihre gesamte Breite hinweg abdecken.

5. Druckanzeigeeinrichtung nach Anspruch 3 oder 4, **dadurch gekennzeichnet, dass** sich die Arbeitsbereichsmarkierung (22) lediglich entlang einer Teillänge der Skala (4) erstreckt, insbesondere derart, dass der Anzeigebereich (14) der Skala (4) über das untere und obere Ende der Arbeitsbereichsmarkierung (22) hinausgeht.

6. Druckanzeigeeinrichtung nach einem der Ansprüche 3 bis 5, **dadurch gekennzeichnet, dass** die Kennzeichnungsflächen (32a, 32b) und die Arbeitsbereichsmarkierung (22) farblich voneinander abweichen.

7. Druckanzeigeeinrichtung nach Anspruch 6, **dadurch gekennzeichnet, dass** die Kennzeichnungsflächen (32a, 32b) in roter Farbe ausgeführt sind.

8. Druckanzeigeeinrichtung nach Anspruch 6 oder 7, **dadurch gekennzeichnet, dass** die Arbeitsbereichsmarkierung (22) in grüner Farbe ausgeführt ist.

9. Druckanzeigeeinrichtung nach einem der Ansprüche 3 bis 8, **dadurch gekennzeichnet, dass** die Arbeitsbereichsmarkierung (22) kreisbogenartig oder zumindest annähernd kreissegmentartig ausgebildet ist.

10. Druckanzeigeeinrichtung nach einem der Ansprüche 3 bis 9, **dadurch gekennzeichnet, dass** die Arbeitsbereichsmarkierung (22) an der radialen Innenseite der Skala (4) angeordnet ist.

11. Druckanzeigeeinrichtung nach einem der Ansprüche 3 bis 9, **dadurch gekennzeichnet, dass** die Arbeitsbereichsmarkierung (22) an der radialen Außenseite der Skala (4) angeordnet ist.

12. Druckanzeigeeinrichtung nach einem der Ansprüche 3 bis 11, **dadurch gekennzeichnet, dass** die Arbeitsbereichsmarkierung (22) unmittelbar auf dem Zifferblatt (3) ausgebildet ist.

13. Druckanzeigevorrichtung nach einem der Ansprüche 1 bis 12, **dadurch gekennzeichnet, dass** die Markierungselemente (15, 16) derart ausgebildet sind, dass unabhängig von der Zeigerstellung stets zumindest ein Teil des Anzeigeabschnittes (6) des Zeigers (1) von der Sichtseite der Druckanzeigeeinrichtung her erkennbar ist.

14. Druckanzeigevorrichtung nach einem der Ansprüche 3 bis 13, **dadurch gekennzeichnet, dass** die Kennzeichnungsflächen (32a, 32b) und der Zeiger (1) derart ausgebildet und angeordnet sind, dass auch bei hinter eine Kennzeichnungsfläche (32a, 32b) ragendem Zeiger (1) stets ein Teil des Anzeigeabschnittes (6) des Zeigers (1) von der Sichtseite der Druckanzeigeeinrichtung sichtbar ist.

15. Druckanzeigeeinrichtung nach einem der Ansprüche 1 bis 14, **dadurch gekennzeichnet, dass** die Sichtscheibe (7) drehfest mit der Skala (4) verbunden ist, wobei die beiden Markierungselemente (15, 16) relativ zur Sichtscheibe unabhängig voneinander verstellbar an der Sichtscheibe (7) gelagert sind.

16. Druckanzeigeeinrichtung nach Anspruch 15, **dadurch gekennzeichnet, dass** die Markierungselemente (15, 16) um eine zur Drehachse (5) des Zeigers (1) koaxiale Drehachse (28) verdrehbar an der Sichtscheibe (7) gelagert sind.

17. Druckanzeigeeinrichtung nach Anspruch 16 oder 16, **dadurch gekennzeichnet, dass** die Markierungselemente (15, 16) an der Innenseite der Sichtscheibe (7) angeordnet sind.

18. Druckanzeigeeinrichtung nach Anspruch 17, **dadurch gekennzeichnet, dass** die Markierungselemente (15, 16) von außen her unzugänglich innen an der Sichtscheibe (7) angeordnet sind, wobei die Sichtscheibe (7) zum Verstellen der Markierungselemente (15, 169 abnehmbar ausgebildet ist.

19. Druckanzeigeeinrichtung nach einem der Ansprüche 1 bis 18, **dadurch gekennzeichnet, dass** die Markierungselemente (32a, 32b) kreissegmentartig ausgebildet sind.

20. Druckanzeigeeinrichtung nach einem der Ansprüche 1 bis 19, **dadurch gekennzeichnet, dass** die Markierungselemente (15, 16) außerhalb ihrer Kennzeichnungsfläche (32a, 32b) durchsichtig ausgebildet sind.

21. Druckanzeigeeinrichtung nach einem der Ansprüche 1 bis 20, **dadurch gekennzeichnet, dass** die Kennzeichnungsfläche (32a, 32b) kreisbogenförmig oder kreissegmentähnlich ausgebildet ist.

22. Druckanzeigeeinrichtung nach einem der Ansprüche 1 bis 21, **gekennzeichnet, durch** ein mit dem Zifferblatt (3), der Skala (4) und dem Zeiger (1) ausgestatteten Gehäuse (2), das einen Druckanschluß zur Einspeisung des zu messenden Druckes aufweist und an dem die Sichtscheibe (7) angeordnet ist.
